# EUROPÄISCHE PATENTSCHRIFT

(11) **EP 1 038 709 B1**
(45) Veröffentlichungstag und Bekanntmachung des Hinweises auf die Patenterteilung: **28.05.2003**
(21) Anmeldenummer: 00104248.0
(22) Anmeldetag: 02.03.2000
(51) Int. Cl.: B60J 7/12

(54) **Cabriolet-Fahrzeug**
Convertible vehicle
Véhicule cabriolet

(30) Priorität: 19.03.1999 DE 19912358
(43) Veröffentlichungstag der Anmeldung: 27.09.2000
(73) Patentinhaber: Wilhelm Karmann GmbH, D-49084 Osnabrück (DE)
(72) Erfinder: Maass, Joachim, 49143 Bissendorf (DE)
(74) Vertreter: Busse & Busse Patentanwälte

(56) Entgegenhaltungen:
- EP-A- 0 819 558
- EP-A- 0 879 722
- DE-C- 601 041
- US-A- 5 785 375

## Beschreibung

Die Erfindung bezieht sich auf ein Cabriolet-Fahrzeug nach dem Oberbegriff des Anspruchs 1. Derartige Cabriolet-Fahrzeuge weisen ein zumindest bereichsweise fait- und/oder klappbares Dach auf, das mehrere zusammenhängende und gegeneinander bewegliche Dachteile umfaßt. Den jeweiligen Dachteilen zugeordnet sind seitliche Rahmenteile, die entweder eine seitliche Begrenzung eines festen Dachteils darstellen oder über Querspriegel oder dergleichen miteinander verbunden sind. Die Dachteile können bereichsweise oder vollständig eine textile Bespannung aufweisen. Ein Fahrzeug dieser Art wird in der DE 601041 C offenbart.

Es is ferner aus der DE 196 39 567 A1 bei einem viersitzigen Cabriolet-Fahrzeug der eingangs genannten Art bekannt, an jeder Seite des Daches drei hintereinander folgende Rahmenteile anzuordnen, von denen sich das vordere in geschlossener Stellung auf dem Windschutzscheibenrahmen abstützt, das mittlere eine im wesentlichen horizontale Lage zur Verlängerung des Daches im Bereich der Rücksitze einnimmt und das rückwärtige sich heckseitig abwärts erstreckt und im karosserieseitig unter der Fensterbrüstung liegenden Hauptlager schwenkbar gehalten ist. Ein derartiges Dach wird beim Öffnen Z-förmig gefaltet und abgelegt. Die rückwärtigen Rahmenteile schneiden die Fensterbrüstung in einem spitzen Winkel.

Aus der oben genannten DE 601041 C ist ein Kraftwagenverdeck bekannt, bei dem ein vorderer Verdeckbereich über ein erstes Gelenkviereck und ein heckseitig sich abwärts erstreckender Dachbereich über ein zweites Gelenkviereck aus einer Schließin eine Offenstellung zu überführen ist. Dabei sind beide Gelenkvierecke jeweils über eigenständige Karosseriehauptlager zu verschwenken. Im Bereich der rückseitigen Fensterbrüstung ist ein Hauptspriegel vorgesehen, an dem sowohl ein vorderer als auch ein mittlerer Dachrahmen schwenkbar gehalten sind, wobei ein mittlerer Dachrahmen und der Hauptspriegel über Lenkerteile ausbildende Fensterpfosten und Schwenkhebel gelenkig festlegbar sind. Eine hinreichende Kopffreiheit für die Insassen ist damit zwar zu erreichen, jedoch ist damit eine Verdeckgestaltung nicht möglich, die sich an ein Karosserieheck anschließt, das einen karosserieseitigen, von oben her zugänglichen Gepäck- bzw. Kofferraum ausbildet.

Der Erfindung liegt das Problem zugrunde, ein Cabriolet-Fahrzeug der eingangs genannten Art dahingehend zu verbessern, daß die Kopffreiheit für die Insassen vergrößert und die Optik im Anschlußbereich des Verdecks an die Fensterbrüstung der Karosserie verbessert wird, ohne den-Stauraum für das geöffnete Verdeck wesentlich zu vergrößern.

Die Erfindung löst dieses Problem mit den Merkmalen des Anspruchs 1. Hinsichtlich weiterer vorteilhafter Ausgestaltungen wird auf die Ansprüche 2 bis 11 verwiesen.

Mit der erfindungsgemäßen Ausbildung eines Cabriolet-Fahrzeugs ist die hintere Anlenkachse der Rahmenteile des rückwärtigen Dachteils von ihrer herkömmlichen Anordnung am Hauptlager verschoben in einen oberhalb der Fensterbrüstung liegenden und zu dieser beabstandeten Bereich, so daß die Absenkung des Daches im Bereich der rückwärtigen Rahmenteile vermindert ist. Durch den Verbindungsrahmenteil, der - anders als bekannte rückwärtige Rahmenteile - nicht im spitzen Winkel gegenüber der Fahrtrichtung auf die Fensterbrüstung trifft, kann das Dach so ausgeführt werden, daß sich in Seitenansicht ein stumpfer Auftreffwinkel des der Seitenscheibe zugewandten Dachbereiches auf die Fensterbrüstungslinie ergibt. Damit ist ein sanfterer Übergang zwischen Dach und. Karosserie geschaffen. Dieser entspricht zudem einem häufig bei Coupés mit feststehendem Dach angewandten Designelement, wodurch die Unterschiede zwischen dem Coupé und dem Cabriolet eines Fahrzeugtyps vermindert werden.

Der Verbindungsrahmenteil ist mit dem rückwärtigen Dachrahmenteil mehrstückig ausgebildet, so daß beide Teile gegeneinander verschwenkbar sind. Dadurch wird erreicht, daß in aufgeschwenkter Lage des Daches der Verbindungsrahmenteil nicht eine im wesentliche senkrechte und gegenüber dem rückwärtigen Dachrahmenteil abgewinkelte.Stellung einnimmt, was zu einer sehr tiefen Lage des geöffneten Dachs in der Karosserie führen und somit den Stauraum verringern würde, sondern durch die Schwenkbarkeit des rückwärtigen Rahmenteils gegenüber dem Verbindungsrahmenteil können diese Teile in geöffnetem Zustand des Dachs in nahezu Parallelstellung voreinander gelagert werden, so daß die Höhe des eingelegten Dachs gegenüber einer herkömmlichen Version nicht vergrößert ist.

Weitere Vorteile und Merkmale sind aus einem nachfolgend in der Zeichnung dargestellten und beschriebenen Ausführungsbeispiel des Gegenstandes der Erfindung ersichtlich.

In der Zeichnung zeigt:

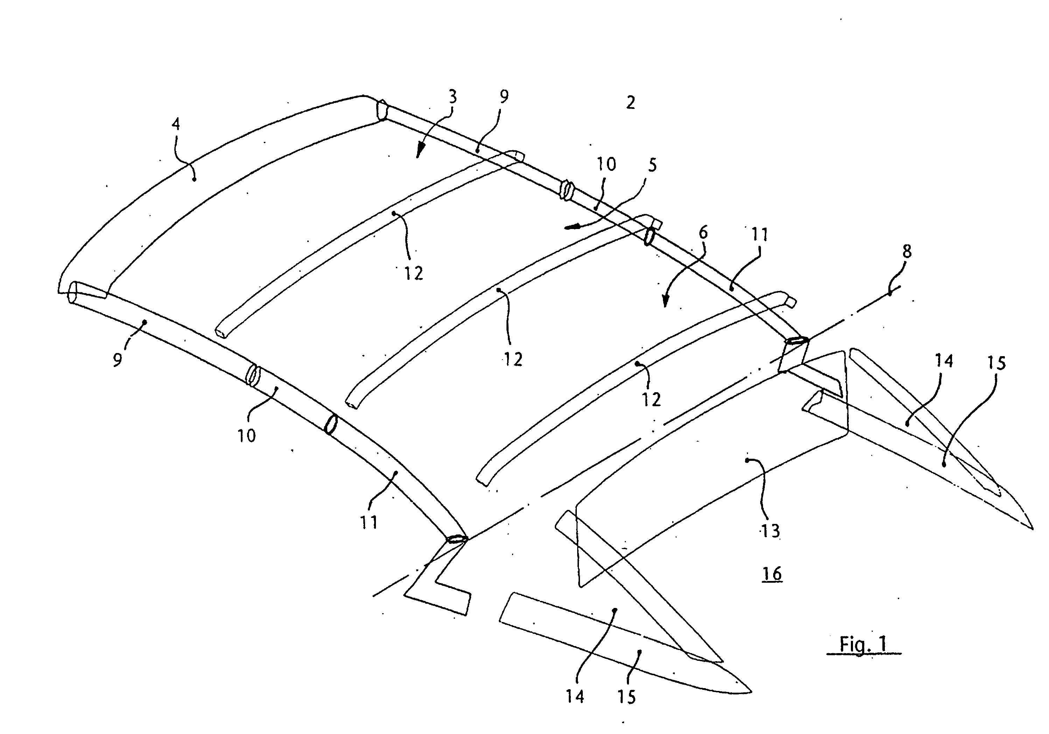

- Fig. 1: eine perspektivische Ansicht eines Daches eines erfindungsgemäßen Cabriolet-Fahrzeugs,

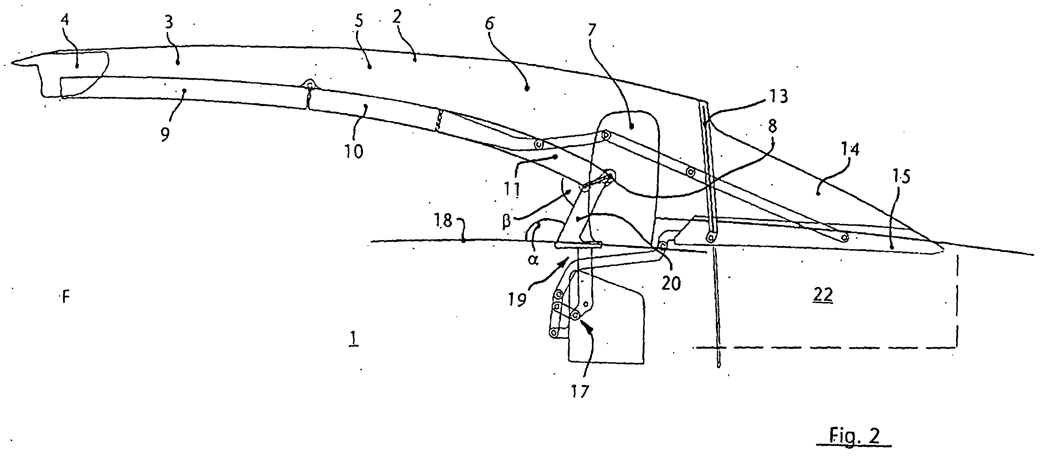

- Fig. 2: den Dachbereich des Cabriolet-Fahrzeugs in Seitenansicht in geschlossener Stellung,
- Fig. 3: eine Detailansicht des hinteren Dachbereichs,
- Fig. 4: eine ähnliche Ansicht wie Fig. 2 während des Öffnens des Verdecks,

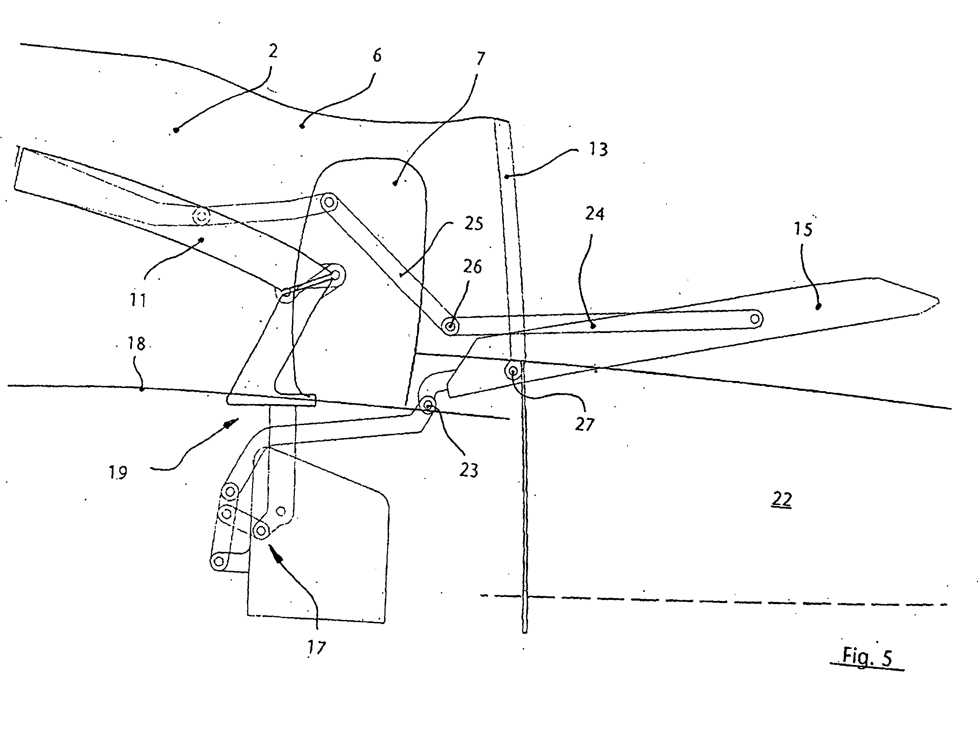

- Fig. 5: eine Detailansicht der Bewegungsphase nach Fig. 4,
- Fig. 6: eine ähnliche Ansicht wie Fig. 4 während der weiteren Dachöffnung,

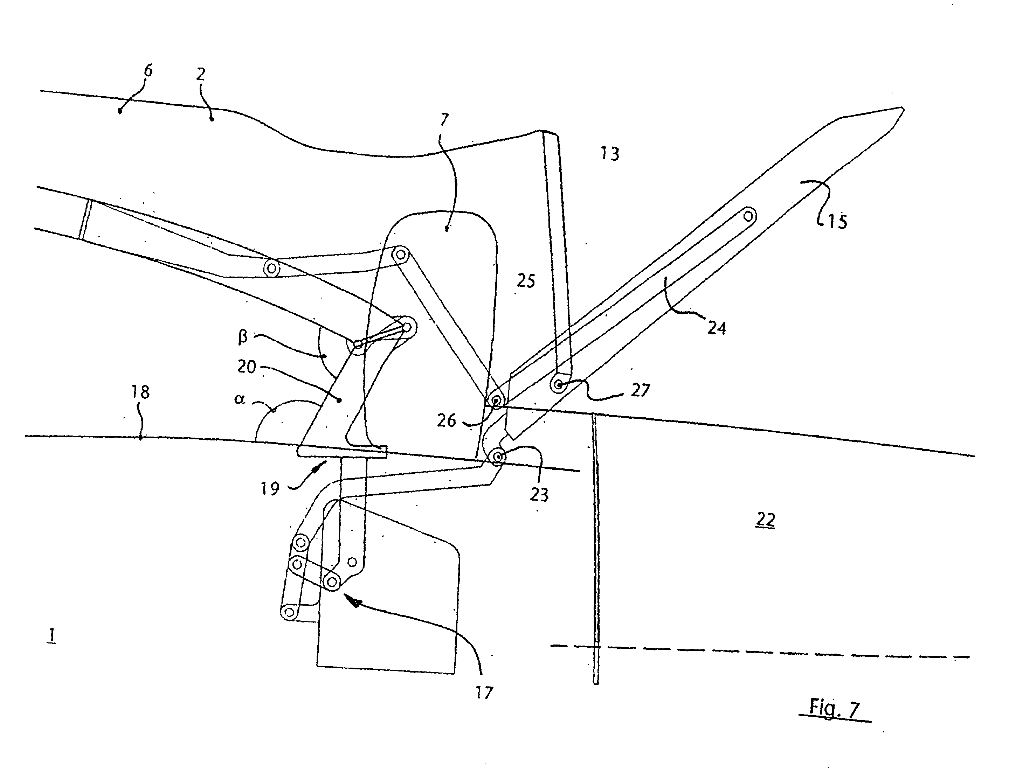

- Fig. 7: eine Detailansicht des hinteren Dachbereichs in der Bewegungsphase nach Fig. 6,
- Fig. 8: eine ähnliche Ansicht wie Fig. 6 bei vollständig aufgeschwenktem hinterem Spannbügel,

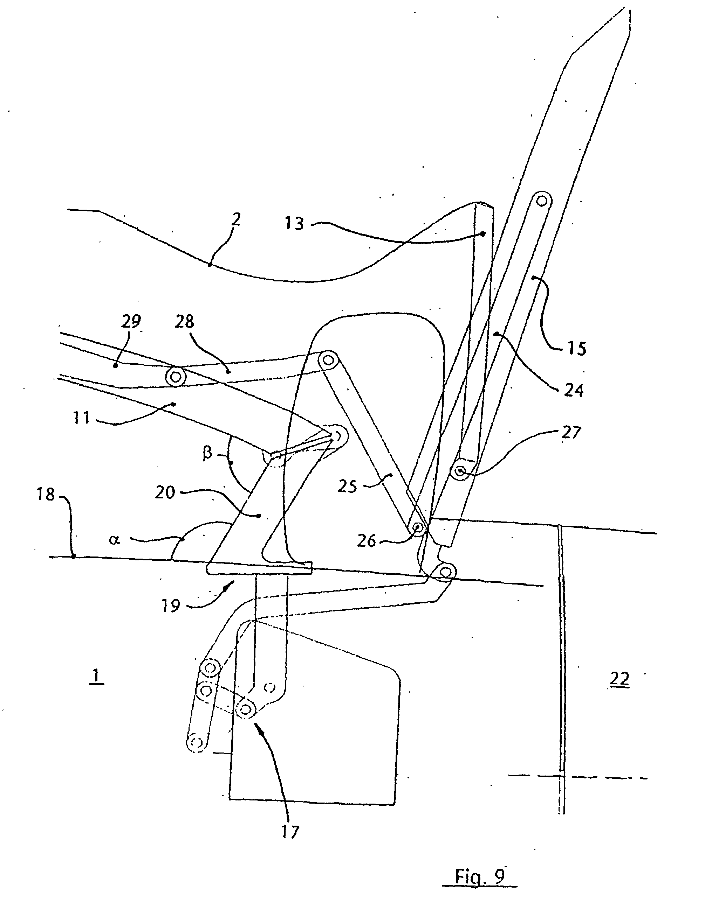

- Fig. 9: eine Detailansicht des hinteren Dachbereichs während der Bewegungsphase nach Fig. 8,
- Fig. 10: das Dach während des weiteren Aufschwenkens in Seitenansicht,

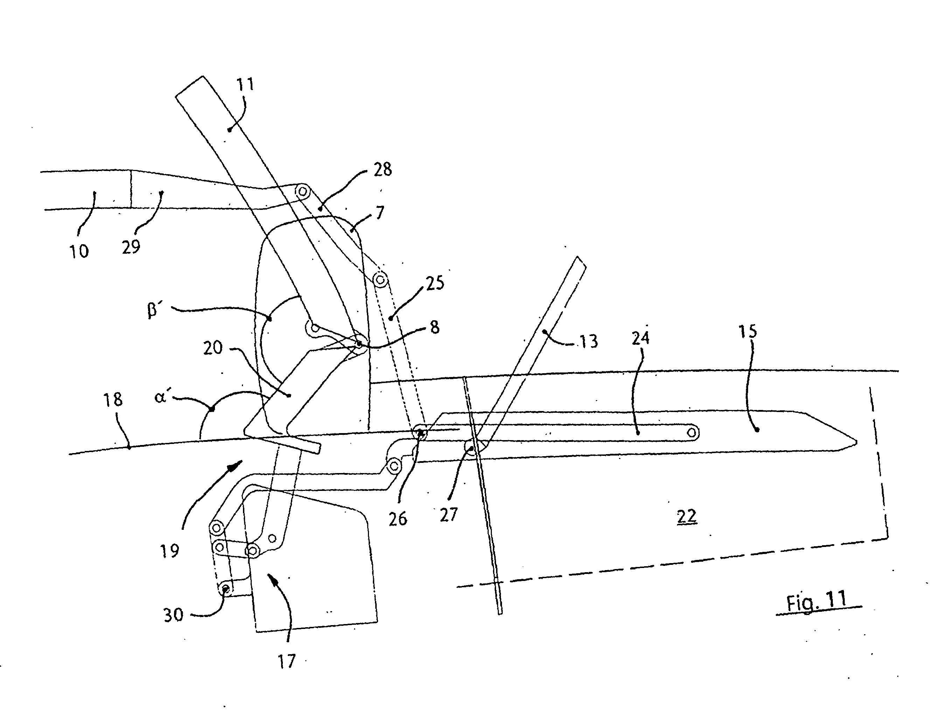

- Fig. 11: eine Detailansicht des hinteren Dachbereiches nach Fig. 10,
- Fig. 12: eine ähnliche Ansicht wie Fig. 10, wobei ein Hebel zur Zwangskopplung des Aufschwenkens des hinteren Dachrahmenteils und dem Aufschwenken des Daches eingezeichnet ist,
- Fig. 13: das weitere Einfalten des Daches in den Verdeckkasten im rückwärtigen Fahrzeugbereich,
- Fig. 14: eine ähnliche Ansicht wie Fig. 13, wobei ein Hebel zur Zwangskopplung der Verschwenkung des hinteren Dachrahmenteils gegenüber dem Hauptlager und des Daches gegenüber dem Hauptlager eingezeichnet ist,

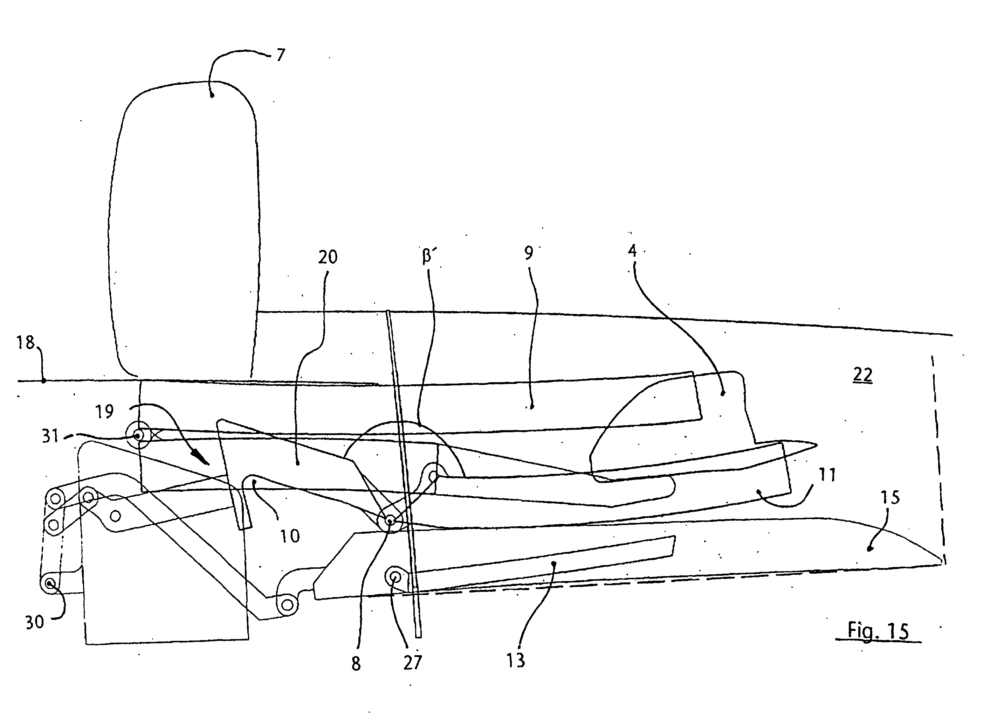

- Fig. 15: das Dach in vollständig geöffneter und im Verdeckkasten abgelegter Stellung.

Das Ausführungsbeispiel zeigt ein viersitziges Cabriolet-Fahrzeug 1 mit einem Dach 2. Dieses umfaßt einen vorderen Dachteil 3, der sich in geschlossener Stellung mit seinem vorderen Querbereich 4 an einem Windschutzscheibenrahmen des Cabriolet-Fahrzeugs 1 abstützt, einen mittleren Dachteil 5, der das Dach 2 in rückwärtige Fahrzeugbereiche verlängert, und einen rückwärtigen Dachteil 6, der sich heckseitig abwärts erstreckt und im Bereich einer hinteren Kopfstütze 7 schwenkbar um eine horizontale Achse 8 gelagert ist. Die Dachteile 3,5,6 sind jeweils von seitlichen Rahmenteilen 9,10,11 seitlich begrenzt. Diese dienen im Ausführungsbeispiel zum Spannen eines textilen Bezuges, der sich zwischen den Rahmenteilen 9,10,11 erstreckt und durch Querspriegel 12 abgestützt ist. Auch feste oder bereichsweise feste Dachteile, die ebenfalls mit einem Textilbezug überzogen sein können, sind möglich.

Ferner ist es möglich, ein ähnliches Dach 2 auch für zweisitzige Cabriolet-Fahrzeuge auszubilden. In diesem Fall ist der mittlere Dachteil 5 entbehrlich, da die Länge des Daches 2 verringert ist.

Im Heckbereich weist das Dach 2 eine im wesentlichen vertikal stehende Heckscheibe 13 auf, seitlich sind zwei im wesentlichen dreiecksförmige Fortsetzungen 14 des Dachs vorgesehen, die über Spannbügel 15, sogenannte Finnen, gegenüber dem Verdeckkastendeckel 16 unter Spannung gehalten sind. Auch ein herkömmlicher heckseitiger Abschluß eines Daches 2 mit einer schräg stehenden Heckscheibe 13 ist vorstellbar.

Die horizontale Achse 8 im heckseitigen Endbereich des hinteren Rahmenteils 11 ist gegenüber dem Hauptlager 17 vertikal beabstandet und liegt oberhalb einer Fensterbrüstung 18. Um die vertikale Beabstandung zu erreichen, ist zwischen dem Hauptlager 17 und dem heckseitigen Endbereich eines rückwärtigen Rahmenteils 11 jeweils ein Verbindungsrahmenteil 19 vorgesehen, der an dem rückwärtigen Rahmenteil 11 an der horizontalen Achse 8 angelenkt und anderenends am Hauptlager 17 schwenkbar gehalten ist.

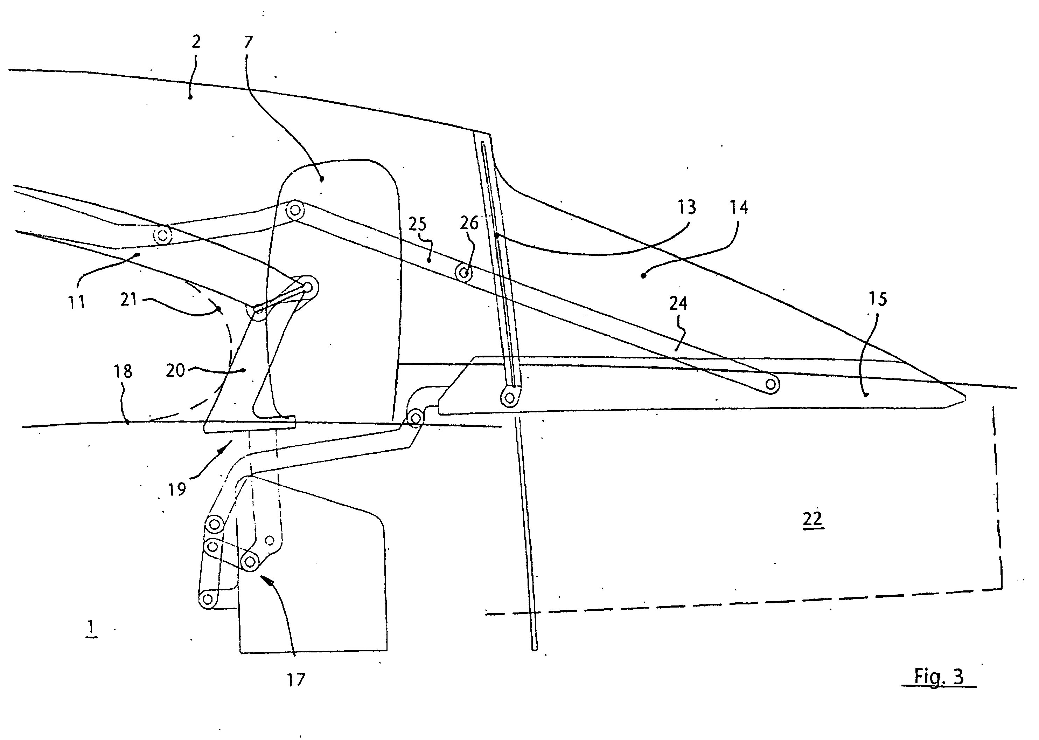

Zumindest ein oberhalb der Fensterbrüstung 18 gelegener Teilbereich 20 des Verbindungsrahmenteils 19 schließt in Fahrtrichtung mit der Fensterbrüstung 18 einen stumpfen Winkel α ein. Im Ausführungsbeispiel verläuft der Verbindungsrahmenteil 19 insgesamt im wesentlichen vertikal. Alternativ ist auch möglich, daß der Verbindungsrahmenteil 19 sich insgesamt in Heckrichtung aufwärts erstreckt und als ganzes mit der Fahrtrichtung F gegenüber der Fensterbrüstung 18 einen stumpfen Winkel α einschließt. Der Teilbereich 20 des Verbindungsrahmenteils 19 muß nicht geradlinig verlaufen, sondern kann, wie in Fig. 3 angedeutet, eine gekrümmte Kontur 21 aufweisen, um somit die Linienführung zu entschärfen. Auch bei einer geradlinigen Kontur des Teilbereichs 20 kann allerdings ein textiles Verdeck, das über diesen Teilbereich 20 des Verbindungsrahmenteils 19 gespannt ist, eine abgerundete Kontur, wie etwa durch die Linie 21 in Fig. 3 angedeutet, aufweisen. Dadurch ergibt sich ein fließender Übergang vom Verdeck in die Fensterbrüstungslinie 18, ohne hier einen scharfen Winkel α ausbilden zu müssen. Optisch ist daher eine Annäherung an ein vielfach bei Fahrzeugen mit festem Dach gewähltes Designelement geschaffen.

Der Verbindungsrahmenteil 19 ist gegenüber dem Rahmenteil 11 als gesondertes Bauteil ausgebildet und schwenkbar mit diesem verbunden. Ohne diese Schwenkbarkeit der Teile 19,11 gegeneinander würde beim Ablegen des Verdecks der Verbindungsrahmenteil 19 im wesentlichen vertikal nach unten ragen müssen, um eine horizontale Lage des Rahmenteils 11 im Verdeckkasten 22 zu ermöglichen. Damit käme das Dach 2 insgesamt in eine sehr tiefe Ablageposition, wodurch der verfügbare Kofferraum erheblich eingeschränkt würde. Um dieses zu vermeiden, wird der Winkel β zwischen dem Verbindungsrahmenteil 19 und dem Rahmenteil 11 während des Öffnens des Daches 2 vergrößert, so daß der Verbindungsrahmenteil bei geöffneter Stellung des Daches 2 eine im wesentliche horizontale Lage einnimmt. Der Verbindungsrahmenteil 19 weist gegenüber dem Dachrahmenteil 11 eine vorteilhaft verringerte Länge auf, so daß auch bei Parallelstellung der beiden Teile im Verdeckkasten 22 die Länge des eingefalteten Daches 2 im Fahrzeug nicht zu groß wird.

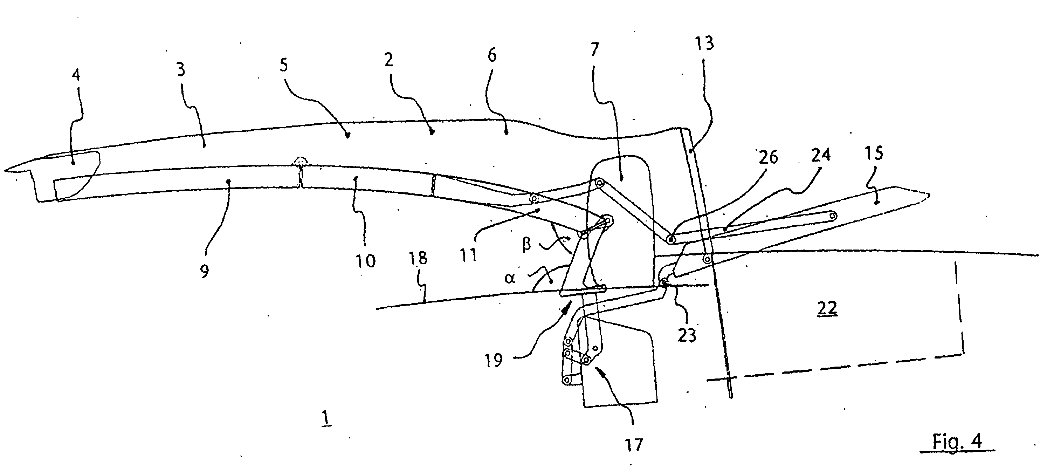

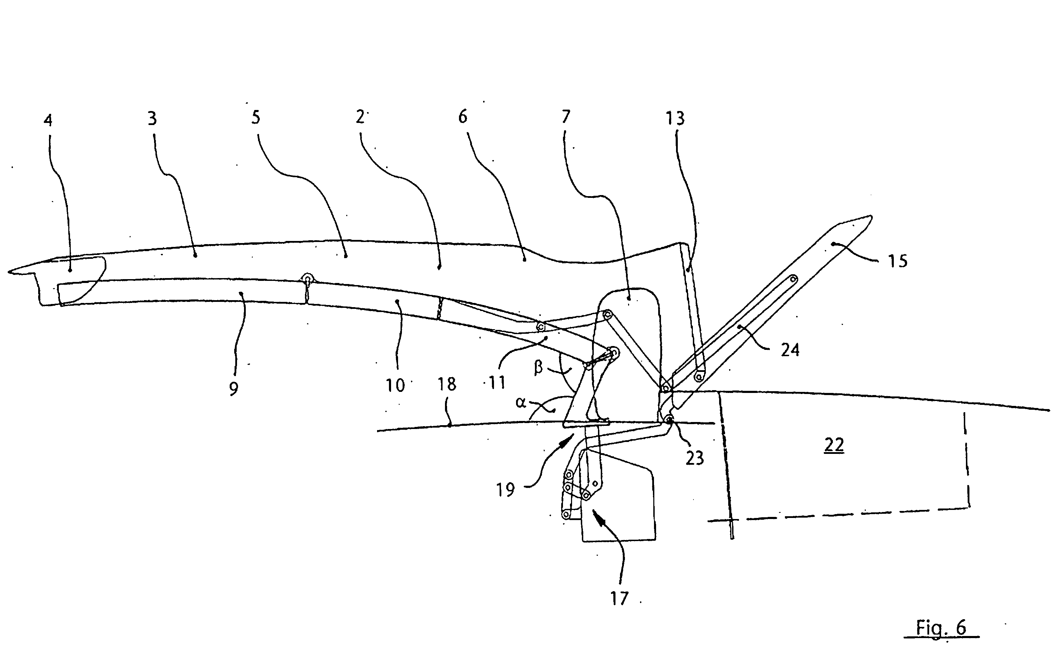

Während der Öffnung des Verdecks (Fig. 4, Fig. 6, Fig. 8, Fig. 10, Fig. 12, Fig. 13) werden zunächst die hinteren Spannbügel 15 vom Verdeckkastendeckel 16 abgehoben und um eine hierbei noch feststehende Achse 23 nach vorne aufgeschwenkt. Während des Öffnens der Spannbügel 15 bleibt der Verbindungsrahmenteil 19 noch in Ruhe, lediglich die Lenker 24,25, die mit dem Spannbügel 15 verbunden sind, knicken gegeneinander um das Gelenk 26 ein, die Heckscheibe 13, die ebenfalls an dem Spannbügel 15 über eine Achse 27 angelenkt ist, wird nach vorne verschwenkt, wodurch das - hier textil bezogene - Dach 2 seine Spannung verliert.

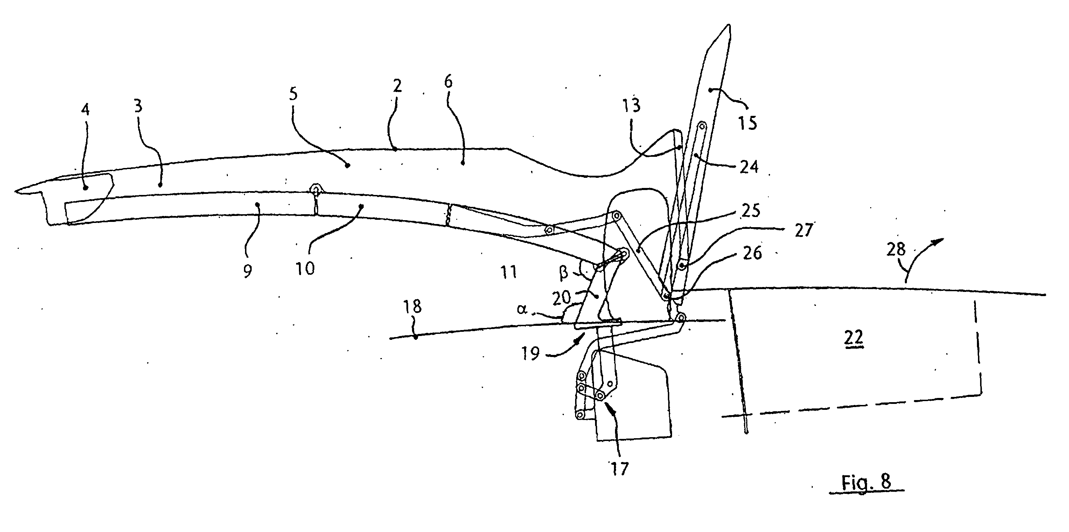

In vollständig aufgeschwenkter Position der Spannbügel 15 (Fig. 8) kann der Verdeckkastendeckel 16 in Richtung des Pfeils 28 geöffnet werden, so daß der Verdeckkasten 22 eine freie Aufnahmeöffnung zum Ablegen des Dachs 2 aufweist.

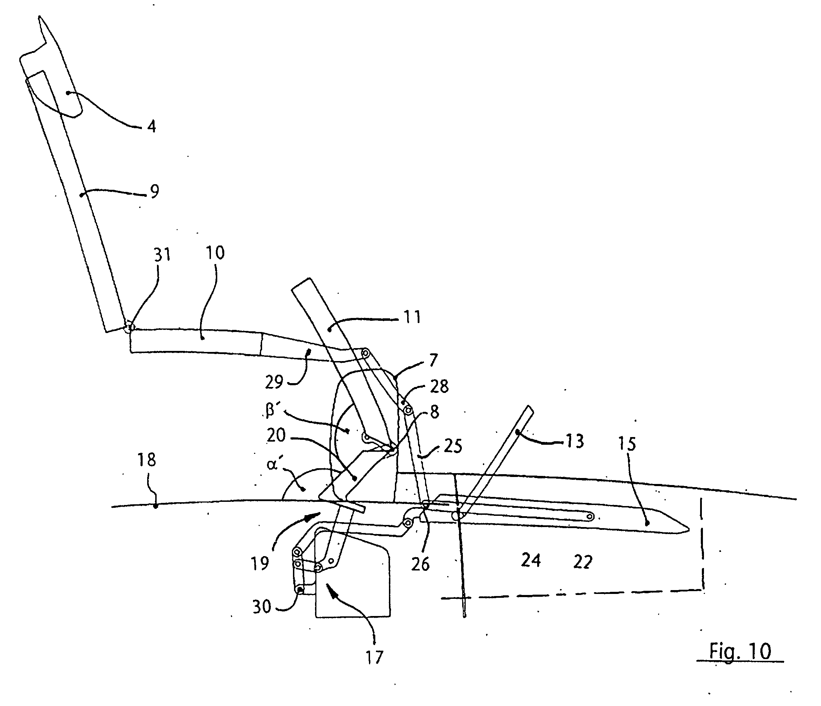

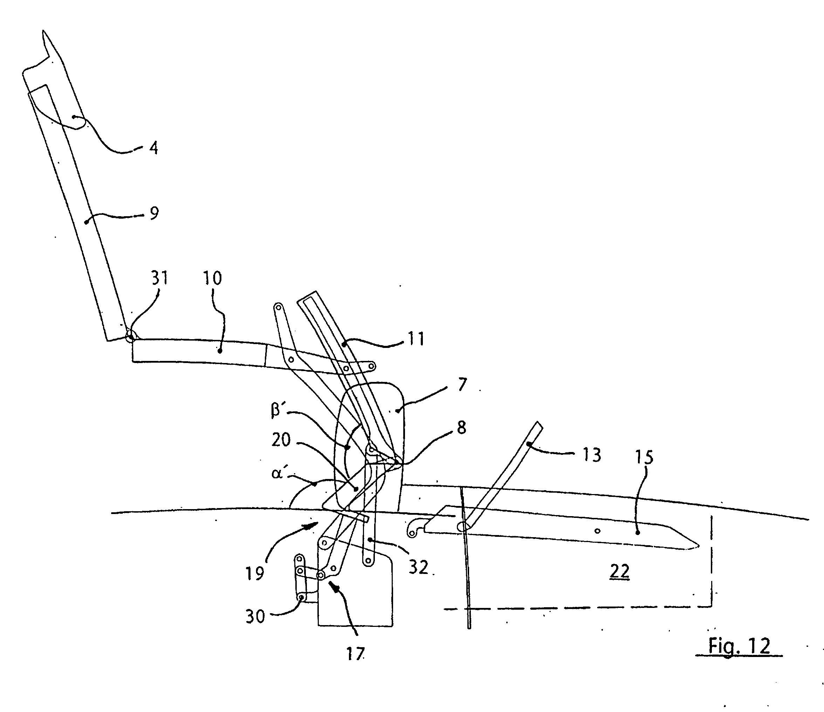

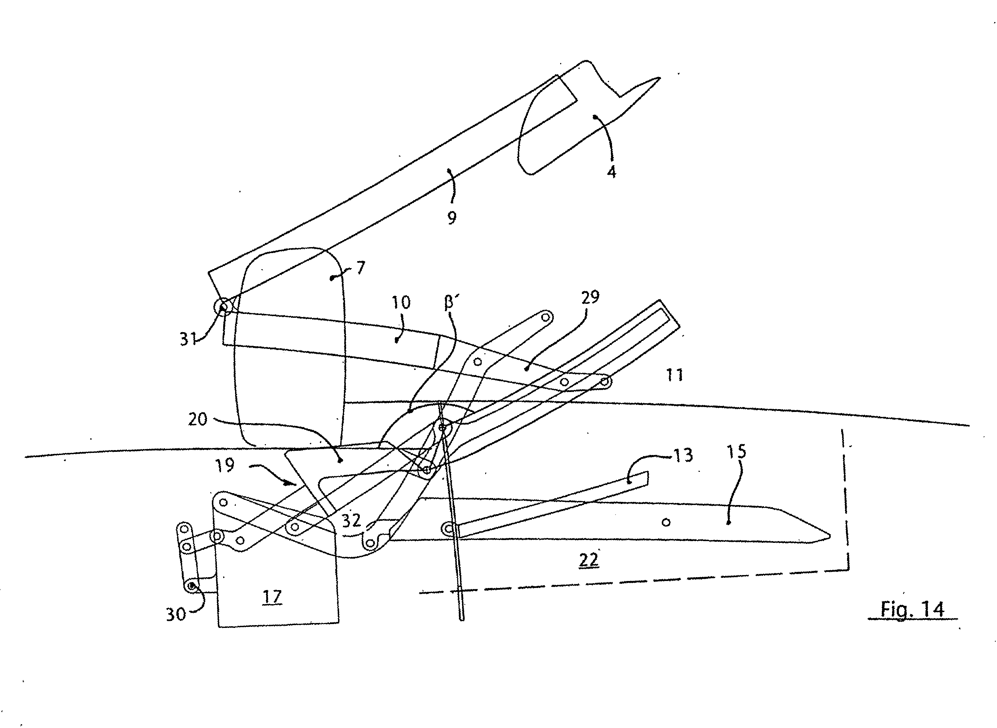

Während des weiteren Aufschwenkens wird über mehrere Lenker, die in der Zeichnung der Übersichtlichkeit halber nur teilweise eingezeichnet sind, das Dach 2 insgesamt im Sinne einer Z-förmigen Einfaltung bewegt, um im Verdeckkasten 22 abgelegt werden zu können. In Fig. 10 ist sichtbar, daß beim Einlegen des Spannbügels 15 in den Verdeckkasten 22 der Lenker 24 und das Gelenk 26 sich relativ zum Spannbügel 15 nicht verlagern, also mit diesem abgelegt werden. Dadurch wird über die weiter anschließenden Lenker 25,28 und 29 der vordere Dachteil 9 gegenüber dem mittleren Dachteil 10 an der Schwenkachse 31 aufwärts verschwenkt, zudem wird der Verbindungsrahmenteil 19 um das Hauptlager 17 in heckwärtige Richtung verschwenkt, so daß sich der Winkel a zu einem Winkel α' vergrößert. Gleichzeitig hebt der Rahmenteil 11 schwenkend um die Horizontalachse 8 von dem Verbindungsrahmenteil 19 ab, wodurch der Winkel β zum Winkel β' vergrößert wird. Die Verschwenkung des Verbindungsrahmenteils 19 gegenüber dem Hauptlager 17 und die Verschwenkung des Rahmenteils 11 gegenüber dem Verbindungsrahmenteil 19 sind dabei zwangsgekoppelt über einen Hebel 32, der einenends im Bereich des Hauptlagers 17 und anderenends am hinteren Dachrahmenteil 11 angelenkt ist. Dieser Hebel 32 ist der Übersichtlichkeit halber nur in den Fig. 12 und 14 eingezeichnet. Durch ihn ist sichergestellt, daß die Vergrößerung der Winkel α' und β' abhängig voneinander erfolgt. Mit zunehmendem Aufschwenken des Verbindungsrahmenteils 19 vergrößert sich durch den Hebel 32 auch der Winkel zwischen diesem und dem hinteren Rahmenteil 11.

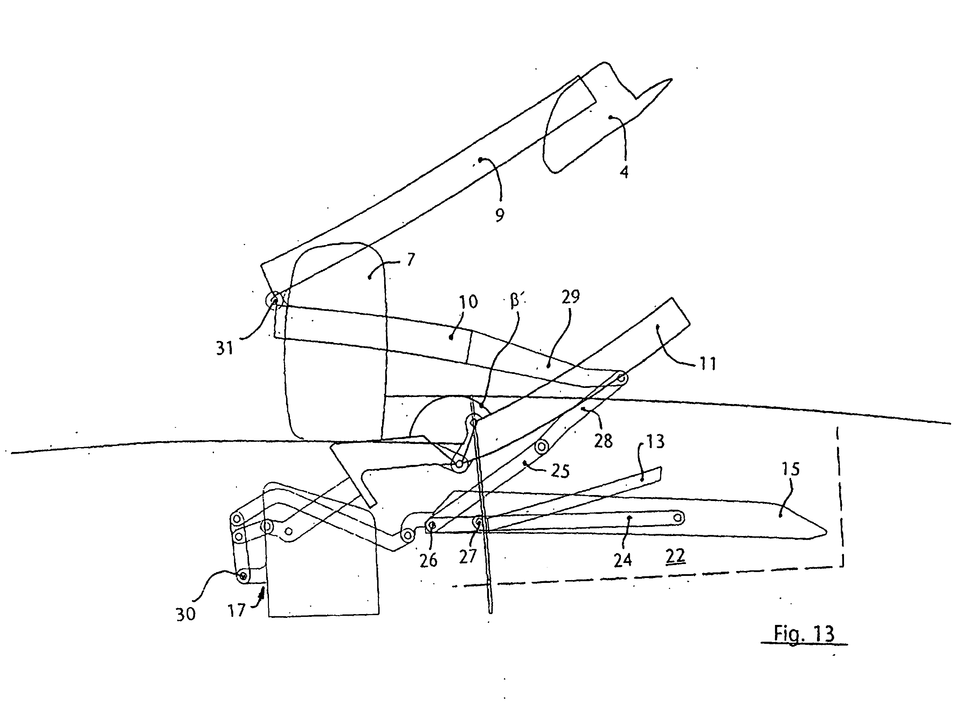

Der Winkel β, der in geschlossener Stellung zwischen 50° und 130° beträgt, je nach Ausführung des Verbindungsrahmenteils 19, öffnet sich dabei während der Öffnung des Daches 2 zu einem Winkel β' und beträgt in geöffneter Stellung zwischen 160° und 200° (Fig. 13) .

Während der weiteren Öffnung des Daches wird der vordere Dachteil 3 gegen- über dem mittleren Dachteil 5 weiter um die Schwenkasche 31 aufgeschwenkt, so lange, bis die Rahmenteile 9 und 10 im wesentlichen horizontal aufeinanderliegen. Ebenso wird über die Lenker 25,28 und 29 der mittlere Dachteil 5 gegenüber dem rückwärtigen Dachteil 6 derart verlagert, daß die Teile in geöffneter . Stellung des Daches 2 aufeinanderliegen. Die Rahmenteile 9,10 und 11 sind dann Z-förmig aufeinandergefaltet (Fig. 13). Die im wesentlichen parallel hintereinanderliegenden Verbindungsrahmenteile 19 und rückwärtigen Rahmenteile 11 überragen dabei in ihrer Länge nicht den Spannbügel 15 bzw. den vorderen Rahmenteil 3, so daß insgesamt das Stauvolumen des Daches 2 nicht oder nur unwesentlich vergrößert ist. Maßgeblich hierfür ist, daß die Teile 19 und 11 gegeneinander schwenkbar sind und in eine nahezu Parallelstellung gelangen, wohingegen ohne diese Schwenkbarkeit die abgewinkelte Position, die die Teile in geschlossener Stellung des Daches 2 haben, gegeneinander beibehalten werden müßte und somit der Stauraum für das eingelegte Dach erheblich vergrößert sein müßte.

Der Verbindungsrahmenteil 19 ist zumindest im oberhalb der Fensterbrüstung liegenden Bereich, in dem ein stumpfer Winkel α mit der Fensterbrüstung 18 eingeschlossen ist, im Querschnitt U-förmig ausgebildet, um dadurch das Verschieben einer Seitenscheibe trotz des stumpfen Winkels α zu ermöglichen. Durch den U-förmigen Querschnitt ist zwischen den Schenkeln des Verbindungsrahmenteils 19 ein Kanal zur Führung einer Seitenscheibe geschaffen, so daß diese auf- und abwärts höhenverlagerbar ist.

## Patentansprüche

1. Cabriolet-Fahrzeug mit einem im rückwärtigen Fahrzeugbereich ablegbaren Dach (2), umfassend zumindest einen vorderen, in geschlossener Stellung einen Windschutzscheibenrahmen zugewandten Dachteil (3) und einen rückwärtigen, sich heckseitig abwärts erstreckenden Dachteil (6) , der an seinen seitlichen Randbereichen Rahmenteile (11) aufweist, die an ihren heckseitigen Endbereichen um eine horizontale Achse (8) schwenkbar gehalten sind
wobei die Achse (8) in geschlossener Stellung des Dachs (2) oberhalb der Fensterbrüstung (18) liegt, und , die Achse (8) gegenüber dem karosserieseitigen Hauptlager (17) , um das herum das Dach (2) schwenkbar ist, über Verbindungsrahmenteile (19) beabstandet ist, **dadurch gekennzeichnet,**
- **daß** die Verbindungsrahmenteile (19) an den heckseitigen Endbereichen der rückwärtigen Rahmenteile (11) über die horizontale Achse (8) schwenkbar angelenkt sind,
- **daß** zumindest ein oberhalb der Fensterbrüstung (18) liegender Teilbereich (20) der Verbindungsrahmenteile (19) mit dieser einen in Fahrtrichtung (F) stumpfen Winkel (α) einschließt.

2. Cabriolet-Fahrzeug nach Anspruch 1, **dadurch gekennzeichnet, daß** zwischen dem vorderden (3) und dem hinteren Dachteil (6) ein mittlerer, gegenüber den benachbarten Dachteilen (3;6) schwenkbarer und in geschlossener Stellung im wesentlichen horizontal verlaufender Dachteil (5) angeordnet ist.

3. Cabriolet-Fahrzeug nach einem der Ansprüche 1 oder 2, **dadurch gekennzeichnet, daß** sich der Verbindungsrahmenteil (19) insgesamt in Heckrichtung aufwärts erstreckt und in Fahrtrichtung (F) mit der Fensterbrüstung (18) den stumpfen Winkel (α) einschließt.

4. Cabriolet-Fahrzeug nach einem der Ansprüche 1 bis 3, **dadurch gekennzeichnet. daß** der Verbindungsrahmenteil (19) eine gegenüber dem Rahmenteil (11) des rückwärtigen Dachteils (6) verringerte Längserstreckung aufweist.

5. Cabriolet-Fahrzeug nach einem der Ansprüche 1 bis 4, **dadurch gekennzeichnet. daß** weitere und genannte seitliche Rahmenteile (9;10;11) eine textile Bespannung einfassen.

6. Cabriolet-Fahrzeug nach einem der Ansprüche 1 bis 5, **dadurch gekennzeichnet. daß** weitere und genannte seitliche Rahmenteile (9;10;11) Begrenzungen eines festen Dachteils ausbilden.

7. Cabriolet-Fahrzeug nach einem der Ansprüche 1 bis 6, **dadurch gekennzeichnet, daß** der Verbindungsrahmenteil (19) in geöffneter Stellung des Dachs (2) eine im wesentlichen horizontale, parallel zum Rahmenteil (11) des rückwärtigen Dachteils (6) ausgerichtete Lage einnimmt.

8. Cabriolet-Fahrzeug nach einem der Ansprüche 1 bis 7, **dadurch gekennzeichnet. daß** der Verbindungsrahmenteil (19) zumindest im oberhalb der Fensterbrüstung (18) liegenden Bereich im Querschnitt U-förmig ausgebildet ist und zwischen seinen Schenkeln einen Führungskanal für eine Seitenscheibe beläßü

9. Cabriolet-Fahrzeug nach einem der Ansprüche 1 bis 8, **gekennzeichnet durch** einen in Bereich des Hauplagers (17) und am Rahnnenteil (11) des rückwärtigen Dachteils angelenkten Hebel (32), der eine Zwangskopplung zwischen dem Schwenkwinkel des Verbindungsrahmenteils (19) gegenüber dem Hauptlager (17) und dem Schwenkwinkel des Verbindungsrahmenteils (19) gegenüber dem seitlichen Rahmenteil (11) des rückwärtigen Dachteils (6) bewirkt.

10. Cabriolet-Fahrzeug nach Anspruch 9, **dadurch gekennzeichnet daß** in geschlossener Stellung der Winkel (β) zwischen dem Verbindungsrahmenteil (19) und dem Rahmenteil (11) des rückwärtigen Dachteils (6) zwischen 50° und 130° beträgt.

11. Cabriolet-Fahrzeug nach Anspruch 10, **dadurch gekennzeichnet, daß** während des Öffnens des Daches (2) der Winkel (β') vergrößert wird und in geöffneter Stellung zwischen 160° und 200° beträgt.

## Claims

1. Convertible vehicle with a removable roof (2) in the rear part of the vehicle, comprising at least a front roof part. (3) which in the closed position is turned towards a windscreen frame, and a rear roof part (6) extending downwards at the rear of the vehicle, which features frame parts (11) in its lateral edge areas, which are retained at their end areas at the rear of the vehicle such as to pivot about a horizontal axis (8), whereby the axis (8) in the closed position of the roof (2) lies above the window balustrade (18), and the axis (8) is kept at a distance by means of connection frame elements (19) in relation to the main bearing (17) on the bodywork side, about which the roof (2) can pivot, **characterised in that** the connection frame elements (19) in the end areas of the rear frame parts (11) at the rear of the vehicle are linked such as to be capable of pivoting above the horizontal axis (8), at least one part area (20) of the connection frame elements (19) located above the window balustrade (18) engages with the balustrade at an obtuse angle (α) seen in the direction of travel (F).

2. Convertible vehicle according to claim 1, **characterised in that** a middle roof section (5), running essentially horizontal in the closed position, is arranged between the front (3) and rear (6) roof part, capable of pivoting in relation to the adjacent roof elements (3; 6).

3. Convertible vehicle according to claims 1 or 2, **characterised in that** the connection frame section (19) extends overall upwards in the direction of the rear of the vehicle, and in the direction of travel (F) engages with the window balustrade (18) at an obtuse angle (α).

4. Convertible vehicle according to one of claims 1 to 3, **characterised in that** the connection frame part (19) features a reduced longitudinal extension in relation to the frame section (11) of the rear roof part (6).

5. Convertible vehicle according to one of claims I to 4, **characterised in that** additional and named side frame elements (9; 10; 11) incorporate a textile covering

6. Convertible vehicle according to one of claims 1 to 5, **characterised in that** additional and named side frame elements (9; 10; 11) form the delimitations of a fixed roof part.

7. Convertible vehicle according to one of claims 1 to 6, **characterised in that** the connection frame part (19) in the open position of the roof (2) adopts a position which is essentially horizontal and aligned parallel to the frame section (11) of the rear roof part (6).

8. Convertible vehicle according to one of claims 1 to 7, **characterised in that** the connection frame part (19) is designed as U-shaped in cross-section at least in the area located above the window balustrade (18), and allows for a guide channel for a side window between its limb elements.

9. Convertible vehicle according to one of claims 1 to 8, **characterised by** a lever (32) in the area of the main bearing (17) and connected by a joint to the rear roof part, which has the effect of forming a forced connection between the pivot angle of the connection frame part (19) in relation to the main beating (17) and the pivot angle of the connection frame part (19) in relation to the side frame section (11) of the rear roof part (6).

10. Convertible vehicle according to claim 9, **characterised in that** in the closed position, the angle (α) between the connection frame part (19) and the frame part (11) of the rear roof part (6) measures between 50° and 130°.

11. Convertible vehicle according to claim 10, **characterised in that**, when the roof(2) is being opened, the angle (β') becomes greater, and in the opened position measures between 180° and 200°.

## Revendications

1. Cabriolet avec un toit (2) qui peut être déposé dans la partie arrière du véhicule, dans lequel le toit comprend une partie avant de toit (3) tournée en position de fermeture vers le cadre du pare-brise, une partie de toit (6) s'étendant vers l'arrière du véhicule et comportant le long de ses côtés des parties de cadre (11), montées basculantes, vers leurs extrémités arrière autour d'un axe horizontal (8) situé, quand le toit est en position de fermeture, au-dessus de l'appui de fenêtre (18), et cet axe (8), autour duquel peut basculer le toit (2), étant espacé du palier principal (17) situé du côté de la carrosserie par des parties de cadre de liaison (19),
**caractérisé en ce que**
- les parties de cadre de liaison (19) sont articulées aux extrémités arrière des parties arrière de cadre (11) de manière à pouvoir basculer au-dessus de l'axe horizontal (8),
- au moins une zone (20) des parties de cadre de liaison (19) située au-dessus de l'appui de fenêtre (18) fait avec celui-ci dans la direction de déplacement (F) du véhicule, un angle obtus α.

2. Cabriolet selon la revendication 1,
**caractérisé en ce qu'**
entre la partie avant (3) et la partie arrière (6) du toit se trouve une partie médiane de toit (5) pouvant basculer par rapport aux parties de toit (3, 6) voisines et qui, en position de fermeture, est essentiellement horizontale.

3. Cabriolet selon la revendication 1 ou 2,
**caractérisé en ce que**
la partie de cadre de liaison (19) est globalement dirigée en montant vers l'arrière et fait avec l'appui de fenêtre (18) dans la direction de déplacement (F), l'angle obtus α.

4. Cabriolet selon l'une des revendications 1 à 3,
**caractérisé en ce que**
la partie de cadre de liaison (19) présente une longueur réduite par rapport à la partie de cadre (11) de la partie arrière (6) de toit.

5. Cabriolet selon l'une des revendications 1 à 4 ,
**caractérisé en ce que**
les parties latérales de cadre citées et d'autres (9 ; 10 ; 11) bordent un textile tendu.

6. Cabriolet selon l'une des revendications 1 à 5,
**caractérisé en ce que**
les parties latérales de toit citées et d'autres (9 ; 10 ; 11) délimitent une partie de toit solide.

7. Cabriolet selon l'une des revendications 1 à 6,
**caractérisé en ce que**
la partie de cadre de liaison (19), en position d'ouverture de toit (2), occupe une position essentiellement horizontale, parallèle à la partie de cadre (11) de la partie arrière de toit (6).

8. Cabriolet selon l'une des revendications 1 à 7,
**caractérisé en ce que**
la partie de cadre de liaison (19), au moins dans sa partie située au-dessus de l'appui de fenêtre (18) a une section en forme d'U formant entre ses ailes un canal de guidage pour une vitre latérale.

9. Cabriolet selon l'une des revendications 1 à 8,
**caractérisé en ce qu'**
il comporte, dans la zone de palier principal (17) un levier (32) qui est articulé à la partie de cadre (11) de la partie arrière de toit et qui crée un couplage forcé entre l'angle de basculement de la partie de cadre de liaison (19) par rapport au palier principal (17) et l'angle de basculement de cette partie (19) par rapport à la partie latérale (11) du cadre de la partie arrière de toit (6).

10. Cabriolet selon la revendication 9,
**caractérisé en ce que**
quand le toit est fermé, l'angle (β) entre la partie de cadre de liaison (19) et la partie de cadre (11) de la partie arrière de toit (6) est compris entre 50 et 130°.

11. Cabriolet selon la revendication 10,
**caractérisé en ce que**
pendant l'ouverture du toit (2), l'angle (β') augmente pour atteindre, en position ouverte, une valeur comprise entre 160° et 200°.
